# EUROPÄISCHE PATENTANMELDUNG

(11) **EP 4 701 336 A2**
(43) Veröffentlichungstag der Anmeldung: **25.02.2026**
(21) Anmeldenummer: 25222446.4
(22) Anmeldetag: 01.12.2022
(51) Int. Cl.: H05B 3/74

(54) **KOCHFELDVORRICHTUNG, KOCHFELD, VERFAHREN ZUM BETRIEB EINER KOCHFELDVORRICHTUNG**

(30) Priorität: 03.12.2021 EP 21383103
(62) Teilanmeldung aus: 22822601.5
(71) Anmelder: BSH Hausgeräte GmbH, 81739 München (DE)
(72) Erfinder: Anton Falcon, Daniel, 50010 Zaragoza (ES); Blan Sanmartin, Cristina, 22002 Huesca (ES); Camañes Vera, Victor, 50003 Zaragoza (ES); Fernandez Martinez, Manuel, 50006 Zaragoza (ES); Herrero Lorente, Lucia, 50009 Zaragoza (ES); Imaz Martinez, Eduardo, 31500 Tudela (Navarra) (ES); Palacios Gasos, Jose Manuel, 50018 Zaragoza (ES); Puyal Puente, Diego, 50014 Zaragoza (ES); Serrano Trullen, Javier, 50017 Zaragoza (ES); Romeo Velilla, Rosario, 50008 Zaragoza (ES)

(57) **Zusammenfassung**

Es wird eine Kochfeldvorrichtung (12a-d), insbesondere eine Induktionskochfeldvorrichtung, mit einer Aufstellplatte (14a-d) und mit zumindest einer unterhalb der Aufstellplatte (14a-d) angeordneten Heizeinheit (16a-d) vorgeschlagen, welche eine Mehrzahl von Heizelementen (18a, 18'a, 20a, 20'a, 21a, 21'a; 18b, 18'b, 20b, 20'b, 21b, 21'b; 18c, 18'c, 20c, 20'c, 21c, 21'c; 18d, 18'd, 20d, 20'd, 21d, 21'd) aufweist, wobei ein erster Teil der Heizelemente (18a, 18'a; 18b, 18'b; 18c, 18'c; 18d, 18'd) eine erste Heizgruppe (24a-d) und zumindest ein zweiter Teil der Heizelemente (20a, 20'a; 20b, 20'b; 20c, 20'c; 20d, 20'd) zumindest eine zweite Heizgruppe (26a-d) bilden, wobei sich eine Anzahl von Heizelementen (18a, 18'a; 18b, 18'b; 18c, 18'c; 18d, 18'd) der ersten Heizgruppe (24a-d) von einer Anzahl von Heizelementen (20a, 20'a; 20b, 20'b; 20c, 20'c; 20d, 20'd) der zweiten Heizgruppe (26a-d) unterscheidet, und die erste Heizgruppe (24a-d) und zumindest die zweite Heizgruppe (26a-d) dazu vorgesehen sind, einen gemeinsamen Kochflächenbereich (30a-d) auszubilden.

## Beschreibung

### Stand der Technik

Die Erfindung betrifft eine Kochfeldvorrichtung nach Anspruch 1, ein Kochfeld nach Anspruch 11 und ein Verfahren zum Betrieb einer Kochfeldvorrichtung nach Anspruch 12.

Aus dem Stand der Technik ist bereits eine sogenannte "Flex"-Kochfeldvorrichtung bekannt, welche zumindest zwei getrennt voneinander ausgebildete Kochflächenbereiche aufweist. In jedem der zumindest zwei Kochflächenbereiche ist eine Heizeinheit angeordnet, welche jeweils zumindest zwei Heizelemente umfasst. Ferner ist bereits vorgeschlagen worden, dass sich die Heizelemente der ersten Heizeinheit des einen Kochflächenbereichs hinsichtlich einer Anzahl und/oder Form und/oder Größe von den Heizelementen der zweiten Heizeinheit des zweiten Kochflächenbereichs unterscheiden. Zudem ist eine "Free"-Kochfeldvorrichtung mit einer Heizeinheit bekannt, wobei die Heizeinheit einen einzigen Kochflächenbereich ausbildet. Die Heizeinheit weist eine Vielzahl von Heizelementen auf, welche alle zueinander identisch ausgebildet sind, und zwar alle die gleiche Form und Größe aufweisen sowie in einer Matrix angeordnet sind.

Die Aufgabe der Erfindung besteht insbesondere, aber nicht beschränkt darauf, darin, eine gattungsgemäße Vorrichtung mit verbesserten Eigenschaften hinsichtlich eines Komforts bereitzustellen. Die Aufgabe wird erfindungsgemäß durch die Merkmale der Ansprüche 1, 11 und 12 gelöst, während vorteilhafte Ausgestaltungen und Weiterbildungen der Erfindung den Unteransprüchen entnommen werden können.

### Vorteile der Erfindung

Es wird eine Kochfeldvorrichtung, insbesondere eine Induktionskochfeldvorrichtung, mit einer Aufstellplatte und mit zumindest einer unterhalb der Aufstellplatte angeordneten Heizeinheit, welche eine Mehrzahl von Heizelementen aufweist, vorgeschlagen, wobei ein erster Teil der Heizelemente eine erste Heizgruppe und zumindest ein zweiter Teil der Heizelemente zumindest eine zweite Heizgruppe bilden, wobei sich eine Anzahl von Heizelementen der ersten Heizgruppe von einer Anzahl von Heizelementen der zweiten Heizgruppe unterscheidet, und die erste Heizgruppe und zumindest die zweite Heizgruppe dazu vorgesehen sind, einen gemeinsamen Kochflächenbereich auszubilden.

Durch eine derartige Ausgestaltung kann ein Komfort, hinsichtlich eines Bedienerkomfort für einen Bediener, gesteigert werden. Zudem kann eine Flexibilität gesteigert werden, und zwar hinsichtlich eins Aufstellens und/oder einer Beheizung von zumindest einer Aufstelleinheit. Des Weiteren kann eine Effizienz gesteigert werden, und zwar beispielsweise hinsichtlich einer Produkt- und/oder Arbeits- und/oder Montage- und/oder Herstellungs- und/oder Kosten- und/oder Leistungseffizienz. Es kann eine effektive Erhitzung von aufgestellten Aufstelleinheiten und/oder eine vorteilhafte Wärmeverteilung erreicht werden. Dadurch kann wiederum eine preiswerte und/oder energiesparende Ausgestaltung bereitgestellt werden. Zudem kann eine Konstruktion hinsichtlich einer Anordnung von Heizelementen verbessert werden. Ferner kann aufgrund eines einzelnen Kochflächenbereichs, welcher gemeinsam von zumindest zwei Heizgruppen gebildet ist, ein freies und flexibles Kocherlebnis für den Bediener ermöglicht und damit ein hoher Bedienerkomfort bereitgestellt werden.

Die Kochfeldvorrichtung könnte als eine Widerstandskochfeldvorrichtung und/oder bevorzugt als Induktionskochfeldvorrichtung ausgebildet sein. Unter einer "Kochfeldvorrichtung" soll zumindest ein Teil, insbesondere eine Unterbaugruppe, eines Kochfelds, vorteilhaft eines Induktionskochfelds, verstanden werden, wobei insbesondere zusätzlich auch Zubehöreinheiten für das Kochfeld umfasst sein können, wie beispielsweise eine Sensoreinheit zur Messung einer Temperatur eines Gargeschirrs und/oder eines Garguts. Es wäre auch denkbar, dass die Kochfeldvorrichtung das gesamte Kochfeld umfasst. Die Kochfeldvorrichtung und/oder das Kochfeld ist/sind zur Verwendung und/oder Anordnung in einem Haushalt, insbesondere einer Küche vorgesehen. Das Kochfeld könnte wiederum Teil eines Kochfeldsystems sein, wobei das Kochfeldsystem eine Vielzahl an Einheiten und/oder Vorrichtungen aufweisen könnte, welche zu einer Be- und/oder Verarbeitung von Lebensmitteln verwendet werden können. Beispielsweise könnte das Kochfeldsystem zusätzlich zumindest eine Abzugseinheit und/oder zumindest die Sensoreinheit und/oder weitere Sensoreinheiten, insbesondere zumindest einen Temperatursensor, aufweisen, welcher zur Platzierung in dem Gargeschirr und/oder in dem Gargut vorgesehen sein könnte, beispielsweise in Form eines Bratspießes.

Die Aufstellplatte ist zumindest eine, insbesondere plattenartige, Einheit, welche zu einem Aufstellen wenigstens einer Aufstelleinheit und/oder zu einem Auflegen wenigstens eines Lebensmittels, insbesondere des Garguts, vorgesehen ist. Die Aufstellplatte könnte beispielsweise als eine Arbeitsplatte, insbesondere als eine Küchenarbeitsplatte, oder als ein Teilbereich zumindest einer Arbeitsplatte, insbesondere zumindest einer Küchenarbeitsplatte, insbesondere des Kochfeldsystems, ausgebildet sein. Alternativ und/oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und vorteilhaft gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Vorzugsweise ist die Aufstellplatte aus einem nichtmetallischen Werkstoff hergestellt. Die Aufstellplatte könnte zumindest teilweise oder wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Kunststoff und/oder aus Keramik und/oder einem Verbundmaterial ausgebildet sein. Unter dem Ausdruck "zu einem Großteil" sollen zumindest 55 %, vorteilhaft zumindest 65 %, vorzugsweise zumindest 75 %, besonders bevorzugt zumindest 85 % und besonders vorteilhaft höchstens 95 % eines Volumen- und/oder Massenanteils verstanden werden. In dem vorliegenden Dokument beziehen sich Lagebezeichnungen, wie beispielsweise "unterhalb" oder "oberhalb", auf einen montierten Zustand der Aufstellplatte, sofern dies nicht explizit anderweitig beschrieben ist.

Die Aufstelleinheit kann ein Haushaltskleingerät und/oder das Gargeschirr aufweisen. Das Haushaltskleingerät könnte beispielsweise eine Kaffeemaschine und/oder ein Toaster und/oder ein Wasserkocher und/oder ein Mixer und/oder ein Rührer sein. Vorteilhaft könnte das Haushaltskleingerät beim Aufstellen auf die Aufstellplatte zumindest teilweise induktiv mit Energie versorgt werden. Das Gargeschirr kann beispielsweise als ein Topf und/oder Pfanne und/oder Bräter ausgebildet sein. Ist die Kochfeldvorrichtung als Induktionskochfeldvorrichtung ausgebildet, könnte das Gargeschirr beim Aufstellen auf die Aufstellplatte zumindest zur Beheizung zumindest teilweise induktiv mit Energie versorgt werden. Denkbar wäre auch, dass die Aufstelleinheit eine Unterlegeinheit umfasst, welche zur Unterlage unter dem Gargeschirr und/oder dem Haushaltskleingerät vorgesehen ist.

Vorteilhaft ist die Unterlegeinheit zwischen der Aufstellplatte und dem Gargeschirr und/oder dem Haushaltskleingerät anordenbar. Insbesondere ist die Aufstelleinheit in dem Kochflächenbereich anordenbar. Vorteilhaft ist die Heizeinheit zur Beheizung der Aufstelleinheit in dem Kochflächenbereich vorgesehen.

Die Kochfeldvorrichtung könnte zusätzlich zu dem Kochflächenbereich auch weitere, und zwar zumindest einen weiteren Kochflächenbereich aufweisen. Bevorzugt weist die Kochfeldvorrichtung genau einen Kochflächenbereich, und zwar den genannten Kochflächenbereich auf, welcher von der ersten Heizgruppe und zumindest der zweiten Heizgruppe gebildet ist. Besonders bevorzugt bildet die erste Heizgruppe und zumindest die zweite Heizgruppe einen variablen Kochflächenbereich aus. Unter einem "variablen Kochflächenbereich" soll ein Kochflächenbereich verstanden werden, der dazu vorgesehen ist, zumindest eine an zumindest die aufgestellte Aufstelleinheit, insbesondre das Haushaltskleingerät und/oder das Gargeschirr, angepasste Heizzone zu bilden. Vorteilhaft unterscheidet sich der variable Kochflächenbereich von einer Kochfläche, bei der Heizzonen, insbesondere durch Markierungen auf der Kochfläche, fest vorgegeben sind.

Die Heizeinheit könnte als eine Widerstandsheizeinheit und/oder als Induktionsheizeinheit ausgebildet sein. Möglicherweise ist das Heizelement als Widerstandsheizelement ausgebildet. Vorteilhaft ist das Heizelement als ein Induktor ausgebildet. Unter einem "Heizelement" soll ein Element verstanden werden, das dazu vorgesehen ist, zumindest in einem Betriebsmodus elektrische Energie zumindest zu einem Großteil an die Aufstelleinheit, vorzugsweise durch zumindest die Aufstellplatte, insbesondere die Kochfeldplatte, hindurch, zu übertragen und/oder elektrische Energie in Wärme umzuwandeln, um insbesondere zumindest die aufgestellte Aufstelleinheit, vorzugsweise durch zumindest die Aufstellplatte hindurch, zu erhitzen. Insbesondere ist das Heizelement dazu vorgesehen, in zumindest einem Betriebsmodus, in dem das Heizelement an eine Versorgungselektronik der Kochfeldvorrichtung oder des Kochfelds angeschlossen ist, eine Leistung von zumindest 100 W, insbesondere zumindest 500 W, vorteilhaft zumindest 1000 W, vorzugsweise zumindest 2000 W zu übertragen

Unter einem "Induktor" soll hier ein Element verstanden werden, welches zumindest eine Induktionsspule aufweist und/oder als eine Induktionsspule ausgebildet ist und welches dazu vorgesehen ist, in wenigstens einem Betriebszustand zumindest einem Empfangselement eine Energie, insbesondere in Form eines magnetischen Wechselfelds, zuzuführen. Das Empfangselement ist insbesondere als ein Teil und/oder eine Unterbaugruppe einer Aufnahmeeinheit ausgebildet und ist insbesondere zu einem Empfang der durch zumindest einen Induktor bereitgestellten Energie vorgesehen. Die Aufnahmeeinheit kann Teil der Kochfeldvorrichtung sein. Alternativ ist denkbar, dass die Aufnahmeeinheit als eine von der Kochfeldvorrichtung unabhängige Einheit und/oder als Teil einer weiteren von der Kochfeldvorrichtung unabhängigen Vorrichtung ausgebildet ist. Die Aufnahmeeinheit kann zu einem Aufstellen auf einen Bereich oberhalb des Induktors und/oder des weiteren Induktors vorgesehen sein. Insbesondere ist die Aufnahmeeinheit Teil der Aufstelleinheit. Die Aufnahmeeinheit könnte Teil des Haushaltskleingeräts und/oder des Gargeschirrs und/oder der Unterlegeinheit sein. Die Aufstelleinheit könnte zumindest eine Sekundärspule als ein Empfangselement zu einem Empfang der durch den Induktor und/oder des weiteren Induktors bereitgestellten Energie aufweisen. Alternativ oder zusätzlich könnte das Empfangselement auch als ein metallisches Heizmittel, insbesondere als ein zumindest teilweise ferromagnetisches Heizmittel, beispielsweise als ein ferromagnetischer Boden der Aufstelleinheit, insbesondere des Gargeschirrs und/oder der Unterlegeinheit und/oder des Haushaltskleingeräts, ausgebildet sein, in welchem in dem Betriebsmodus der Heizeinheit durch den Induktor Wirbelströme und/oder Ummagnetisierungseffekte hervorgerufen werden, die in Wärme umgewandelt werden.

Der erste Teil der Heizelemente und/oder der zweite Teil der Heizelemente könnte sich insbesondere jeweils aus zumindest einem Heizelement zusammensetzen. Eine Heizgruppe könnte aus zumindest einem Heizelement der Mehrzahl an Heizelementen der Heizeinheit oder aus einem Satz von Heizelementen, und zwar mit zumindest zwei Heizelementen der Mehrzahl an Heizelementen der Heizeinheit zusammengesetzt sein. Vorzugsweise weist die erste Heizgruppe und/oder zumindest die zweite Heizgruppe insbesondere jeweils zumindest zwei Heizelemente der Mehrzahl an Heizelementen der Heizeinheit auf.

Die Kochfeldvorrichtung ist zu einem Anschluss an ein zumindest zweiphasiges, vorzugsweise dreiphasiges, Stromversorgungsnetz vorgesehen. Die Kochfeldvorrichtung weist zumindest zwei Wechselrichtereinheiten mit jeweils zumindest zwei Wechselrichtern auf, welche dazu vorgesehen sind, die Heizelemente mit einem hochfrequenten Wechselstrom zu betreiben. Eine erste Wechselrichtereinheit ist zumindest in dem Betriebszustand mit einer ersten Phase des Stromversorgungsnetzes verbunden und dazu vorgesehen, die Heizelemente der ersten Heizgruppe zu betreiben. Eine zweite Wechselrichtereinheit ist in dem Betriebszustand mit einer zweiten Phase des Stromversorgungsnetzes verbunden und dazu vorgesehen, die Heizelemente der zweiten Heizgruppe zu betreiben. Vorzugsweise ist die erste Wechselrichtereinheit auf einer ersten Platine angeordnet und die zweite Wechselrichtereinheit auf einer von der ersten Platine separat ausgebildeten zweiten Platine angeordnet. Insbesondere unterscheidet sich die Heizeinheit von einer Matrixheizeinheit, wobei bevorzugt die erste Heizgruppe und zumindest die zweite Heizgruppe von zumindest den zwei unterschiedlichen Wechselrichtereinheiten betrieben werden.

Möglicherweise könnte die erste Heizgruppe eine größere Anzahl an Heizelementen aufweisen als die zweite Heizgruppe. Vorzugsweise weist die zweite Heizgruppe eine größere Anzahl an Heizelementen auf als die erste Heizgruppe. Denkbar wäre, dass die erste Heizgruppe oder die zweite Heizgruppe lediglich ein Heizelement mehr aufweist als die zweite Heizgruppe oder die erste Heizgruppe. Bevorzugt unterscheidet sich eine Anzahl an Heizelementen der ersten Heizgruppe und eine Anzahl an Heizelementen der zweiten Heizgruppe hinsichtlich zumindest zwei Heizelementen, vorteilhaft hinsichtlich zumindest vier Heizelementen, vorzugsweise hinsichtlich zumindest sechs Heizelementen und besonders bevorzugt hinsichtlich zumindest acht Heizelementen. Die erste Heizgruppe oder die zweite Heizgruppe könnte beispielsweise eine doppelt so große Anzahl an Heizelementen ausweisen als die zweite Heizgruppe oder die erste Heizgruppe.

Die Kochfeldvorrichtung kann eine Steuereinheit aufweisen. Unter einer "Steuereinheit" soll eine elektronische Einheit verstanden werden, die vorzugsweise in einer Steuer- und/oder Regeleinheit des Kochfelds zumindest teilweise integriert ist und die vorzugsweise dazu vorgesehen ist, zumindest die Heizeinheit, insbesondere die Heizelemente der ersten Heizgruppe und/oder zumindest die Heizelemente der zweiten Heizgruppe, zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Vorteilhaft weist die Kochfeldvorrichtung zumindest eine Sensoreinheit auf, die insbesondere von der Heizeinheit, insbesondere den Heizelementen der ersten Heizgruppe und/oder zumindest den Heizelementen der zweiten Heizgruppe, selbst gebildet ist, und welche dazu vorgesehen ist, die aufgestellte Aufstelleinheit, insbesondere mittels Messung zumindest einer Induktivität und/oder zumindest einer Kapazität, zu detektieren. Insbesondere ist die Steuereinheit dazu vorgesehen, Messwerte der Sensoreinheit auszuwerten, zumindest eine Heizzone zu berechnen und zumindest ein Heizelement der ersten Heizgruppe und/oder zumindest ein Heizelement der zumindest zweiten Heizgruppe festzulegen, welche diese Heizzone bilden. Insbesondere ist die Steuereinheit dazu vorgesehen, einer detektierten Aufstelleinheit eine in Form, Größe und/oder Position angepasste Heizzone zuzuordnen. Vorteilhaft ist die Steuereinheit dazu vorgesehen, mittels Aktivierung zumindest eines, insbesondere zumindest eines Großteils oder aller, der Heizelemente der ersten Heizgruppe und/oder zumindest der zweiten Heizgruppe zumindest eine Detektion der aufgestellten Aufstelleinheit durch die Sensoreinheit zu ermöglichen. Alternativ sind weitere, einem Fachmann als sinnvoll erscheinende Möglichkeiten zu einer Detektion von aufgestellter Aufstelleinheit denkbar, wie beispielsweise Gewichtsmessungen.

Vorteilhaft ist die Sensoreinheit dazu vorgesehen, zumindest eine Größe von der aufgestellten Aufstelleinheit zu detektieren. Insbesondere ist die Steuereinheit dazu vorgesehen, eine Größe einer aufgestellten Aufstelleinheit mittels einer Anzahl an von der Aufstelleinheit bedeckten Heizelementen in dem Kochflächenbereich zu ermitteln. Die Steuereinheit kann dazu vorgesehen sein, zumindest eine regelmäßige Detektion von aufgestellter Aufstelleinheit, insbesondere durch die Sensoreinheit, zu bewirken. Unter der Wendung, dass die Steuereinheit dazu vorgesehen ist, zumindest eine "regelmäßige" Detektion von aufgestelltem Gargeschirr zu bewirken, soll verstanden werden, dass die Steuereinheit dazu vorgesehen ist, eine Detektion von aufgestellter Aufstelleinheit in zeitlichen Abständen von weniger als 30 s, insbesondere von weniger als 10 s, vorteilhaft von weniger als 5 s, besonders vorteilhaft von weniger als 1 s, vorzugsweise von weniger als 0,1 s zu bewirken. Unter der Wendung, dass die Steuereinheit dazu vorgesehen ist, zumindest eine regelmäßige Detektion von aufgestellter Aufstelleinheit zu "bewirken", soll verstanden werden, dass die Steuereinheit dazu vorgesehen ist, zumindest eine regelmäßige Detektion von aufgestellter Aufstelleinheit durch Aktivierung zumindest eines der, insbesondere zumindest eines Großteils der, vorteilhaft aller Heizelemente der ersten Heizgruppe und/oder zumindest der zweiten Heizgruppe zu ermöglichen.

Im vorliegenden Dokument dienen Zahlwörter, wie beispielsweise "erste/r/s" und "zweite/r/s", welche bestimmten Begriffen vorangestellt sind, lediglich zu einer Unterscheidung von Verfahrensschritten und/oder Objekten und/oder einer Zuordnung zwischen Objekten untereinander und implizieren keine vorhandene Gesamtanzahl und/oder Rangfolge der Objekte und/oder der Verfahrensschritte. Insbesondere impliziert ein "zweites" Objekt und/oder Verfahrensschritt nicht zwangsläufig ein Vorhandensein eines "ersten" Objekts und/oder Verfahrensschritts. Ferner soll unter "vorgesehen" hier und im Folgenden speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass die erste Heizgruppe in einem Randbereich des Kochflächenbereichs und die zweite Heizgruppe in einem mittleren Bereich des Kochflächenbereichs angeordnet ist. Hierdurch kann ein Komfort, hinsichtlich eines Bedienerkomforts, weiter gesteigert werden. Zudem können in unterschiedlichen Bereichen eines Kochflächenbereichs zumindest zwei Heizgruppen effizient, bedienerfreundlich und kompakt angeordnet werden, wobei die zumindest zwei Heizgruppen gemeinsam den einen Kochflächenbereich ausbilden und zumindest eine Aufstelleinheit von einem Bediener flexibel innerhalb des Kochflächenbereichs aufgestellt werden kann.

Der mittlere Bereich der Kochflächenbereiche ist zumindest zu einer Seite von einem Randbereich, insbesondere dem Randbereich, umgeben. Vorteilhaft ist zumindest der Randbereich unmittelbar neben dem mittleren Bereich angeordnet. Der Randbereich könnte sich in Breitenrichtung des Kochflächenbereichs, insbesondere der Aufstellplatte, betrachtet über zumindest 10 %, vorteilhaft zumindest 20 % und vorzugsweise zumindest 30 % und besonders bevorzugt höchstens 45 % des Kochflächenbereichs, insbesondere der Aufstellplatte, erstrecken. In Tiefenrichtung des Kochflächenbereichs, insbesondere der Aufstellplatte, betrachtet, könnte sich der Randbereich über zumindest 50 %, vorteilhaft zumindest 80 % und besonders bevorzugt über die gesamte Tiefe des Kochflächenbereichs, insbesondere der Aufstellplatte, erstrecken.

Vorteilhaft erstreckt sich der mittlere Bereich in Breitenrichtung betrachtet ausgehend von einem Mittelpunkt des Kochflächenbereichs, insbesondere der Aufstellplatte, jeweils nach außen. Insbesondere erstreckt sich der mittlere Bereich in Breitenrichtung betrachtet nach außen bis zu zumindest einem Randbereich, bevorzugt bis zu zumindest dem genannten Randbereich. Der mittlere Bereich könnte in Breitenrichtung betrachtet zumindest 5 %, vorteilhaft zumindest 10 %, vorzugsweise zumindest 30 % und besonders bevorzugt höchstens 80 % einer Breite des Kochflächenbereichs, insbesondere der Aufstellplatte, einnehmen. In Tiefenrichtung des Kochflächenbereichs, insbesondere der Aufstellplatte, betrachtet, könnte sich der mittlere Bereich über zumindest 50 %, vorteilhaft zumindest 80 % und besonders bevorzugt über die gesamte Tiefe des Kochflächenbereichs, insbesondere der Aufstellplatte, erstrecken.

Die erste Heizgruppe könnte den Randbereich zumindest zu 30 %, vorteilhaft zumindest zu 50 % und vorzugsweise zumindest zu 80 % ausfüllen. Die zweite Heizgruppe könnte den mittleren Bereich zumindest zu 30 %, vorteilhaft zumindest zu 50 % und vorzugsweise zumindest zu 80 % ausfüllen. Darunter, dass eine Heizgrupp einen Bereich "ausfüllt", soll verstanden werden, dass ein prozentualer Anteil von zumindest 10 %, vorteilhaft von zumindest 20 % und bevorzugt von zumindest 50 % des Bereichs von zumindest der Heizgruppe, insbesondere zumindest einem Heizelement der Heizgruppe bedeckt ist.

Außerdem wird vorgeschlagen, dass sich die Heizelemente der ersten Heizgruppe und zumindest die Heizelemente der zweiten Heizgruppe hinsichtlich einer Form und/oder Größe unterscheiden. Damit kann ein Komfort, und zwar ein Bedienerkomfort weiter gesteigert sowie eine Flexibilität erhöht werden. Zudem kann eine Effizienz, hinsichtlich einer Leistungseffizienz, gesteigert und eine effiziente Erhitzung von zumindest einer aufgestellten Aufstelleinheit bereitgestellt werden. Ferner kann eine vorteilhafte Wärmeverteilung erreicht werden, da aufgrund unterschiedlicher Formen und/oder Größen von Heizelementen einer ersten Heizgruppe und zumindest einer zweiten Heizgruppe einer Aufstelleinheit in Abhängigkeit von ihrer Ausgestaltung, und zwar ihrer Größe und/oder Form passende Heizelemente zugeordnet werden können, sodass damit eine effiziente und komfortable Erhitzung bereitgestellt werden kann.

Beispielsweise könnten die Heizelemente der ersten Heizgruppe eine eckige Form und die Heizelemente der zweiten Heizgruppe eine runde Form oder umgekehrt aufweisen. Die Heizelemente der ersten Heizgruppe und/oder der zweiten Heizgruppe könnten beispielsweise eine ovale und/oder rechteckige und/oder quadratische Form aufweisen. Zumindest ein rundes Heizelement der ersten Heizgruppe und/oder zumindest der zweiten Heizgruppe könnte beispielsweise einen Durchmesser von zumindest 7 cm, vorteilhaft zumindest 8 cm, vorzugsweise zumindest 10 cm und besonders bevorzugt höchstens 20 cm aufweisen. Denkbar wäre, dass die Heizelemente der ersten Heizgruppe kleiner sind als die Heizelemente der zweiten Heizgruppe. Bevorzugt sind die Heizelemente der ersten Heizgruppe größer als die Heizelemente der zweiten Heizgruppe. Beispielsweise könnten die Heizelemente der ersten Heizgruppe um zumindest 2 %, vorteilhaft um zumindest 10 %, vorzugsweise um zumindest 30 % und besonders bevorzugt um zumindest 50 % größer als die Heizelemente der zweiten Heizgruppe sein. Denkbar wäre, dass die Heizelemente der ersten Heizgruppe zumindest im Wesentlichen doppelt so groß sind als die Heizelemente der zweiten Heizgruppe. Unter "zumindest im Wesentlichen" soll in diesem Zusammenhang verstanden werden, dass eine Abweichung von einem vorgegebenen Wert weniger als 25 %, vorzugsweise weniger als 10 % und besonders bevorzugt weniger als 5 % des vorgegebenen Werts beträgt.

Zumindest ein Heizelement der ersten Heizgruppe und/oder der zweiten Heizgruppe könnte eine Breitenerstreckung von zumindest 150 mm, vorteilhaft zumindest 200 mm und vorzugsweise zumindest 250 mm und besonders bevorzugt von höchstens 300 mm aufweisen, insbesondere falls zumindest das Heizelement der ersten Heizgruppe und/oder der zweiten Heizgruppe eine rechteckige und/oder quadratische Form aufweist. Zumindest ein Heizelement, insbesondere das zuvor genannte Heizelement, der ersten Heizgruppe und/oder der zweiten Heizgruppe könnte eine Tiefenerstreckung von zumindest 90 mm, vorteilhaft zumindest 100 mm und vorzugsweise zumindest 120 mm und besonders bevorzugt von höchstens 200 mm aufweisen, insbesondere falls zumindest das Heizelement der ersten Heizgruppe und/oder der zweiten Heizgruppe eine rechteckige und/oder quadratische Form aufweist.

Bevorzugt sind die Heizelemente, und zwar zumindest zwei Heizelemente und vorteilhaft alle Heizelemente einer Heizgruppe, insbesondere der ersten Heizgruppe oder zumindest der zweiten Heizgruppe, zumindest im Wesentlichen identisch zueinander ausgebildet. Die zumindest zwei Heizelemente und vorteilhaft alle Heizelemente einer Heizgruppe, insbesondere der ersten Heizgruppe oder zumindest der zweiten Heizgruppe, können identische Komponenten aufweisen. Vorteilhaft unterscheiden sich zumindest zwei Heizelemente und vorteilhaft alle Heizelemente einer Heizgruppe, insbesondere der ersten Heizgruppe oder zumindest der zweiten Heizgruppe, nur durch ihre Anordnung unterhalb der Aufstellplatte und insbesondere innerhalb des Kochflächenbereichs.

Des Weiteren wird vorgeschlagen, dass zumindest zwei benachbarte Heizelemente der zweiten Heizgruppe einen in Tiefenrichtung und/oder in Breitenrichtung des Kochflächenbereichs betrachtet kleineren Abstand zueinander aufweisen als zumindest zwei benachbarte Heizelemente der ersten Heizgruppe. Dadurch kann ein Komfort, eine Effizienz und eine Flexibilität weiter gesteigert werden. Ferner kann eine kompakte Konstruktion bereitgestellt werden.

Unter zumindest zwei benachbarten Heizelementen einer Heizgruppe sollen zumindest zwei nebeneinander angeordnete Heizelemente der Heizgruppe verstanden werden. Unter der Wendung, dass zwei Heizelemente einer Heizgruppe "nebeneinander" angeordnet sind, soll verstanden werden, dass eine kürzeste die Heizelemente verbindende Gerade ausgehend von einem ersten der Heizelemente der Heizgruppe lediglich das erste Heizelement und ein zweites der Heizelemente der Heizgruppe, das von dem ersten Heizelement getrennt ausgebildet ist, schneidet, insbesondere unter Vermeidung eines weiteren Heizelements der Heizgruppe zwischen den beiden Heizelementen, wobei ein Abstand des weiteren Heizelements der Heizgruppe zu zumindest einem der benachbart angeordneten Heizelemente mindestens so groß ist wie ein Abstand zwischen den benachbart angeordneten Heizelementen.

Zumindest zwei benachbarte Heizelemente der ersten Heizgruppe könnten einen ersten Abstand zueinander aufweisen. Zumindest zwei benachbarte Heizelemente der zweiten Heizgruppe könnten einen zweiten Abstand, insbesondere den zuvor genannten Abstand, zueinander aufweisen. Der zweite Abstand könnte zumindest im Wesentlichen um zumindest 2 %, vorteilhaft um zumindest 5 % und vorzugsweise um zumindest 10 % und besonders bevorzugt um zumindest 30 % kleiner sein als der erste Abstand der zumindest zwei benachbarten Heizelemente der ersten Heizgruppe. Denkbar wäre, dass der erste Abstand in Tiefenrichtung bemessen sein könnte. Möglicherweise ist der zweite Abstand in Breitenrichtung bemessen. Alternativ könnte der erste Abstand in Breitenrichtung und der zweite Abstand in Tiefenrichtung bemessen sein. Bevorzugt sind der erste Abstand und der zweite Abstand jeweils in Breitenrichtung bemessen. Alternativ könnten der erste Abstand und der zweite Abstand jeweils in Tiefenrichtung bemessen sein.

Zumindest ein Heizelement der ersten Heizgruppe könnte in Breitenrichtung des Kochflächenbereichs betrachtet eine Breitenerstreckung aufweisen, welche zumindest im Wesentlichen um zumindest 10 %, insbesondere zumindest 20 % und vorteilhaft zumindest 30 % größer ist als eine Breitenerstreckung zumindest eines Heizelements der zweiten Heizgruppe. Um einen Komfort zu steigern und eine Konstruktion zu verbessern, wird vorgeschlagen, dass zumindest ein Heizelement der ersten Heizgruppe in Breitenrichtung des Kochflächenbereichs betrachtet eine Breitenerstreckung aufweist, welche zumindest im Wesentlichen um 50 % größer ist als eine Breitenerstreckung zumindest eines Heizelements der zweiten Heizgruppe. Hierdurch können innerhalb eines Kochflächenbereichs unterschiedlich breite Heizelemente angeordnet werden, um gerade eine effiziente und komfortable Erhitzung von unterschiedlich großen und/oder geformten Aufstelleinheiten zu ermöglichen. Unter der Breitenerstreckung zumindest eines Heizelements der zweiten Heizgruppe könnte auch ein in Breitenrichtung betrachteter Durchmesser zumindest eines Heizelements, insbesondere eines runden Heizelements, der zweiten Heizgruppe verstanden werden. Denkbar wäre auch, dass zumindest ein Heizelement der ersten Heizgruppe in Breitenrichtung des Kochflächenbereichs betrachtet eine Breitenerstreckung aufweist, welche zumindest im Wesentlichen zumindest um 51 %, insbesondere zumindest um 60 % und vorteilhaft zumindest um 70 % größer ist als eine Breitenerstreckung zumindest eines Heizelements der zweiten Heizgruppe.

Zumindest ein Heizelement der ersten Heizgruppe könnte in Tiefenrichtung des Kochflächenbereichs betrachtet eine Tiefenerstreckung aufweisen, welche zumindest im Wesentlichen um zumindest 10 %, insbesondere zumindest 20 % und vorteilhaft zumindest 30 % größer ist als eine Tiefenerstreckung zumindest eines Heizelements der zweiten Heizgruppe. In weiteren Ausgestaltungen der Erfindung wird vorgeschlagen, dass zumindest ein Heizelement der ersten Heizgruppe in Tiefenrichtung des Kochflächenbereichs betrachtet eine Tiefenerstreckung aufweist, welche zumindest im Wesentlichen identisch ist zu einer Tiefenerstreckung zumindest eines Heizelements der zweiten Heizgruppe. Dadurch kann eine besonders komfortable und kompakte Konstruktion bereitgestellt werden. Ferner können Heizelemente innerhalb eines Kochflächenbereichs möglichst großflächig und/oder gleichmäßig angeordnet werden, wodurch wiederum eine Effizienz, und zwar hinsichtlich einer Erhitzung zumindest einer Aufstelleinheit und/oder eine vorteilhaft gleichmäßige Wärmeverteilung bereitgestellt werden kann. Damit kann ein Komfort, hinsichtlich eines Benutzerkomforts, weiter gesteigert werden. Unter der Tiefenerstreckung zumindest eines Heizelements der zweiten Heizgruppe könnte auch ein in Tiefenrichtung betrachteter Durchmesser zumindest eines Heizelements, insbesondere eines runden Heizelements, der zweiten Heizgruppe verstanden werden.

In einer weiteren Ausgestaltung der Erfindung wird vorgeschlagen, dass zumindest die Heizelemente der ersten Heizgruppe in einer insbesondere einzelnen Reihe angeordnet sind. Dadurch kann eine kompakte Konstruktion bereitgestellt und ein Komfort weiter gesteigert werden.

Unter einer "Reihe" soll eine Zeile und/oder eine Spalte und/oder ein Streifen verstanden werden. Insbesondere sind die Heizelemente der ersten Heizgruppe entlang einer die Heizelemente verbindenden Reihenlängsrichtung, die insbesondere als eine Gerade ausgebildet ist, aneinander angeordnet, insbesondere aufgereiht. Insbesondere verbindet die Reihenlängsrichtung Schwerpunkte der Heizelemente. Ebenfalls denkbar ist, dass die Heizelemente versetzt angeordnet sind, wobei Schwerpunkte der Heizelemente zu einer Gerade, die zumindest im Wesentlichen parallel zu der Reihenlängsrichtung ausgerichtet ist und die die Heizelemente zumindest im Wesentlichen mittig miteinander verbindet, einen Abstand aufweisen, der kleiner ist als 50 %, insbesondere kleiner als 40 %, vorteilhaft kleiner als 30 % eines Betrags zumindest einer Erstreckung, insbesondere einer Längserstreckung und/oder einer Quererstreckung, zumindest eines der die Reihe ausbildenden Heizelemente. Unter einer "einzelnen" Reihe aus zumindest zwei Heizelementen soll eine Reihe verstanden werden, bei welcher die Heizelemente in, insbesondere genau, einer Reihenlängsrichtung benachbart angeordnet sind, wobei die Steuereinheit dazu vorgesehen ist, aus den in Reihenlängsrichtung benachbart angeordneten Heizelementen zumindest eine an zumindest die aufgestellte Aufstelleinheit angepasste Heizzone zu bilden.

Um eine Flexibilität zu erhöhen und damit wiederum einen Komfort, hinsichtlich eines Bedienerkomforts, zu steigern, wird vorgeschlagen, dass zumindest die Heizelemente der zweiten Heizgruppe zumindest teilweise matrixförmig angeordnet sind. Hierdurch kann eine hohe Flexibilität bereitgestellt und ein Komfort, hinsichtlich eines Benutzerkomforts, weiter gesteigert werden.

Darunter, dass zumindest die Heizelemente der zweiten Heizgruppe zumindest teilweise matrixförmig angeordnet sind, soll vorliegend verstanden werden, dass die Heizelemente der zweiten Heizgruppe in zumindest zwei Spalten und/oder zumindest zwei Reihen nebeneinander angeordnet sind. Bevorzugt bilden zumindest die Heizelemente der zweiten Heizgruppe zumindest teilweise und vorteilhaft vollständig eine Heizelementmatrix aus. Unter einer "Heizelementmatrix" soll eine, vorzugsweise zweidimensionale, vorteilhaft regelmäßige Anordnung, insbesondere in quadratischem oder hexagonalem Muster, von zumindest vier, insbesondere zumindest sechs, vorteilhaft zumindest acht, und besonders bevorzugt zumindest neun Heizelementen verstanden werden.

Wenn ein dritter Teil der Heizelemente eine dritte Heizgruppe bilden, welche identisch zu der ersten Heizgruppe ausgebildet ist, kann eine besonders komfortable und einfache Konstruktion bereitgestellt sowie eine Effizienz gesteigert werden. Die Heizelemente der dritten Heizgruppe könnten zumindest hinsichtlich einer Anzahl und/oder einer Form und/oder einer Größe identisch zu den Heizelementen der ersten Heizgruppe ausgebildet sein. Bevorzugt weisen die Heizelemente der dritten Heizgruppe eine rechteckige Form auf. Die Kochfeldvorrichtung kann eine dritte Wechselrichtereinheit mit zumindest zwei Wechselrichtern aufweisen. Die dritte Wechselrichtereinheit ist in dem Betriebszustand mit einer dritten Phase des Stromversorgungsnetzes verbunden und dazu vorgesehen, die Heizelemente der dritten Heizgruppe zu betreiben.

Zudem wird vorgeschlagen, dass die dritte Heizgruppe in einem weiteren, insbesondere dem Randbereich gegenüberliegenden, Randbereich der Heizzone angeordnet ist. Dadurch kann eine besonders komfortable Anordnung zum Aufstellen zumindest einer Aufstelleinheit bereitgestellt und damit ein Komfort, und zwar ein Bedienerkomfort optimiert werden. Ferner kann eine effektive Erhitzung von aufgestellten Aufstelleinheiten und/oder eine vorteilhafte Wärmeverteilung erreicht werden, womit wiederum eine Effizienz gesteigert werden kann. Vorzugsweise begrenzen der Randbereich und der weitere Randbereich den mittleren Bereich zumindest teilweise. Insbesondere ist der mittlere Bereich zwischen dem Randbereich und dem weiteren Randbereich angeordnet.

Darüber hinaus geht die Erfindung aus von einem Verfahren zum Betrieb einer Kochfeldvorrichtung, insbesondere der zuvor genannten Kochfeldvorrichtung.

Durch ein derartiges Verfahren kann ein Komfort, und zwar ein Bedienerkomfort gesteigert werden. Ferner kann eine hohe Flexibilität beim Aufstellen einer Aufstelleinheit zu einer Beheizung bereitgestellt werden. Zudem kann eine Effizienz gesteigert werden, und zwar beispielsweise hinsichtlich einer Produkt- und/oder Arbeits- und/oder Montage- und/oder Herstellungs- und/oder Kosten- und/oder Leistungseffizienz. Des Weiteren kann aufgrund eines gemeinsamen Kochflächenbereichs ein besonders komfortables und effizientes Verfahren zum Betrieb der Kochfeldvorrichtung bereitgestellt werden. Das Verfahren zum Betrieb der Kochfeldvorrichtung könnte mehrere Verfahrensschritte und/oder Verfahrensteilschritte aufweisen. Bevorzugt umfasst das Verfahren zumindest einen Betriebsschritt. Der Betriebsschritt könnten wiederum aus mehreren Betriebsteilschritten bestehen. Insbesondere bei dem Verfahren zum Betrieb der Kochfeldvorrichtung wird zumindest eine Heizzone an eine Form und/oder Größe und/oder Position einer Aufstelleinheit angepasst gebildet. In zumindest dem Betriebsschritt wird zumindest ein Heizelement der ersten Heizgruppe und/oder zumindest ein Heizelement der zweiten Heizgruppe und/oder zumindest ein Heizelement der dritten Heizgruppe zur Beheizung zumindest der Aufstelleinheit angesteuert und/oder geregelt und/oder aktiviert. Bedeckt die Aufstelleinheit zumindest ein Heizelement oder mehr als ein Heizelement der ersten Heizgruppe und/oder zumindest ein Heizelement oder mehr als ein Heizelement der zweiten Heizgruppe und/oder zumindest ein Heizelement oder mehr als ein Heizelement der dritten Heizgruppe, können in dem Betriebsschritt die bedeckten Heizelemente der ersten Heizgruppe und/oder die Heizelemente der zweiten Heizgruppe und/oder die Heizelemente der dritten Heizgruppe zu einer gemeinsamen Heizzone zur Beheizung der Aufstelleinheit zusammenschlossen und gemeinsam betrieben und/oder angesteuert und/oder geregelt werden.

Die Kochfeldvorrichtung und/oder das Kochfeld und/oder das Verfahren soll/sollen hierbei nicht auf die oben beschriebene Anwendung und Ausführungsform beschränkt sein. Insbesondere kann/können die Kochfeldvorrichtung und/oder das Kochfeld und/oder das Verfahren zu einer Erfüllung einer hierin beschriebenen Funktionsweise eine von einer hierin genannten Anzahl von einzelnen Elementen, Bauteilen, Einheiten und Verfahrensschritten abweichende Anzahl aufweisen. Zudem sollen bei den in diesem Dokument angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind mehrere Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein schematisch dargestelltes Kochfeld mit einer Kochfeldvorrichtung, welche eine Aufstellplatte und eine unter der Aufstellplatte angeordneten Heizeinheit aufweist, wobei eine Aufstelleinheit auf die Aufstellplatte aufgestellt ist,
- Fig. 2: eine Anordnung von einer Mehrzahl an Heizelementen der Heizeinheit unterhalb der Aufstellplatte,
- Fig. 3: ein schematisch dargestelltes Verfahren zum Betrieb der Kochfeldvorrichtung,
- Fig. 4: eine Kochfeldvorrichtung in einem weiteren Ausführungsbeispiel,
- Fig. 5: eine Kochfeldvorrichtung in einem weiteren Ausführungsbeispiel und
- Fig. 6: eine Kochfeldvorrichtung in einem weiteren Ausführungsbeispiel.

### Beschreibung der Ausführungsbeispiele

Nachfolgend sind von mehrfach vorhandenen Objekten in den Figuren jeweils lediglich zwei mit einem Bezugszeichen versehen. Ferner handelt es sich bei den vorliegenden Figuren um schematische und nicht maßstabsgetreue Darstellungen.

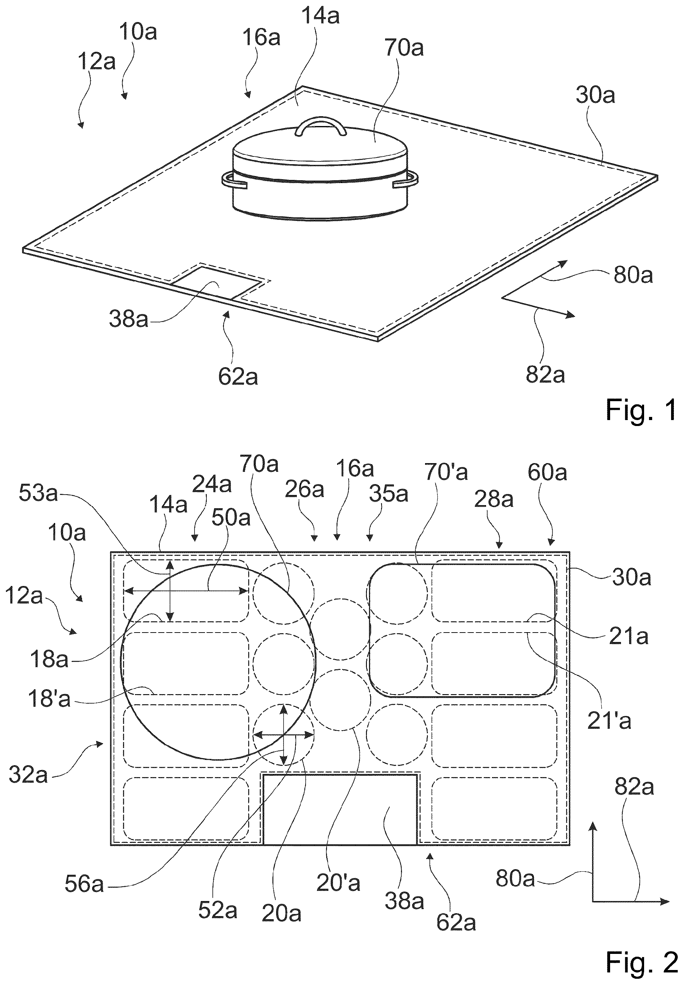

Die Figur 1 zeigt ein Kochfeld 10a mit einer Kochfeldvorrichtung 12a. Die Kochfeldvorrichtung 12a ist vorliegend als eine Induktionskochfeldvorrichtung 12a und das Kochfeld 10a als Induktionskochfeld ausgebildet. Die Kochfeldvorrichtung 12a weist eine Aufstellplatte 14a zu einem Aufstellen von zumindest einer Aufstelleinheit 70a auf. In dieser beispielhaften Ausführung ist die Aufstellplatte 14a als Kochfeldplatte ausgebildet. Alternativ und/oder zusätzlich könnte die Aufstellplatte 14a zumindest abschnittsweise als Arbeitsplatte, und zwar als Küchenarbeitsplatte ausgebildet sein. Die Aufstellplatte 14a bildet eine Kochfläche zum Aufstellen zumindest der Aufstelleinheit 70a aus. Die Kochfeldvorrichtung 12a weist einen Kochflächenbereich 30a auf. Vorliegend weist die Aufstellplatte 14a den Kochflächenbereich 30a auf. Die Aufstellplatte 14a weist genau einen, und zwar den Kochflächenbereich 30a auf. Der Kochflächenbereich 30a ist vorliegend identisch mit der Kochfläche ausgebildet.

Die Aufstelleinheit 70a ist wie in Figur 1 gezeigt beispielhaft als Gargeschirr, und zwar als Topf ausgebildet. Denkbar wäre auch, dass es sich bei der Aufstelleinheit alternativ und/oder zusätzlich um ein Haushaltskleingerät handelt, wie beispielsweise ein Wasserkocher und/oder eine Kaffeemaschine und/oder ein Mixer und/oder ein Rührer.

Die Kochfeldvorrichtung 12a weist eine Heizeinheit 16a mit einer Mehrzahl an Heizelementen 18a, 18'a, 20a, 20'a, 21a, 21'a auf. Die Heizeinheit 16a ist als Induktionsheizeinheit ausgebildet. Unterhalb der Aufstellplatte 14a ist die Heizeinheit 16a angeordnet. Die Figur 2 verdeutlicht in einer schematischen Darstellung die Anordnung der Heizeinheit 16a mit der Mehrzahl an Heizelementen 18a, 18'a, 20a, 20'a, 21a, 21'a unterhalb der Aufstellplatte 14a. Vorliegend sind der Übersichtlichkeit halber lediglich sechs Heizelemente 18a, 18'a, 20a, 20'a, 21a, 21'a der Heizeinheit 16a mit einem Bezugszeichen versehen. Die Heizeinheit 16a ist als Induktionsheizeinheit ausgebildet. Ferner sind die Heizelemente 18a, 18'a, 20a, 20'a, 21a, 21'a als Induktionsheizelemente ausgebildet. Die Heizelemente 18a, 18'a, 20a, 20'a, 21a, 21'a sind jeweils dazu vorgesehen, zumindest eine auf der Aufstellplatte 14a oberhalb der Heizelemente 18a, 18'a, 20a, 20'a, 21a, 21'a aufgestellte Aufstelleinheit 70a zu erhitzen.

Ein erster Teil der Heizelemente 18a, 18'a bildet eine erste Heizgruppe 24a. Zumindest ein zweiter Teil der Heizelemente 20a, 20'a bildet zumindest eine zweite Heizgruppe 26a. Die erste Heizgruppe 24a und zumindest die zweite Heizgruppe 26a sind dazu vorgesehen, gemeinsam genau einen Kochflächenbereich 30a, und zwar den Kochflächenbereich 30a auszubilden. In dieser beispielhaften Ausführung weist die Heizeinheit 16a einen dritten Teil an Heizelementen 21a, 21'a auf, welcher eine dritte Heizgruppe 28a ausbildet. Die dritte Heizgruppe 28a könnte zu der ersten Heizgruppe 24a und/oder der zweiten Heizgruppe 26a verschieden ausgebildet sein. Vorliegend ist die dritte Heizgruppe 28a identisch zu der ersten Heizgruppe 24a ausgebildet. Der Übersichtlichkeit halber sind sowohl von der ersten Heizgruppe 24a als auch von der zweiten Heizgruppe 26a und der dritten Heizgruppe 28a jeweils nur zwei Heizelemente mit einem Bezugszeichen versehen. Vorliegend bilden die erste Heizgruppe 24a, die zweite Heizgruppe 26a und die dritte Heizgruppe 28a gemeinsam den Kochflächenbereich 30a aus.

Der Kochflächenbereich 30a ist ein variabler Kochflächenbereich und vorliegend frei von Markierungen und/oder festen Positionen zum Aufstellen zumindest der Aufstelleinheit 70a. Der variable Kochflächenbereich 30a ist dazu vorgesehen, zumindest eine an zumindest die aufgestellte Aufstelleinheit 70a angepasste Heizzone zu bilden.

In Figur 2 sind beispielhaft zwei Aufstelleinheiten 70a, 70'a dargestellt, welche sich hinsichtlich einer Form und Größe unterscheiden und auf der Aufstellplatte 14a aufgestellt sind. Der variable Kochflächenbereich 30a ist dazu vorgesehen, jeweils an die Aufstelleinheiten 70a, 70'a angepasste Heizzonen zu bilden. Figur 2 verdeutlicht, dass in dieser beispielhaften Darstellung die Aufstelleinheit 70a sowohl zumindest zwei Heizelemente 18a, 18'a der ersten Heizgruppe 24a und zumindest zwei Heizelemente 20a, 20'a der zweiten Heizgruppe 26a bedeckt. Ferner bedeckt die Aufstelleinheit 70'a gleichzeitig zumindest zwei Heizelemente 21a, 21'a der dritten Heizgruppe 28a und zumindest zwei Heizelemente 20a, 20'a der zweiten Heizgruppe 26a, und zwar vorliegend zumindest zwei andere Heizelemente 20a, 20'a der zweiten Heizgruppe 26a als die Aufstelleinheit 70a.

Die Kochfeldvorrichtung 12a weist eine Steuereinheit 62a auf. Die Steuereinheit 62a ist zumindest teilweise in einer Steuer- und/oder Regeleinheit des Kochfelds 10a integriert ist und ist dazu vorgesehen, zumindest die Heizeinheit 16a, und zwar die Heizelemente 18a, 18'a der ersten Heizgruppe 24a, die Heizelemente 20a, 20'a der zweiten Heizgruppe 26a und zumindest die Heizelemente 21a, 21'a der dritten Heizgruppe 28a zu steuern und/oder zu regeln. Die Steuereinheit 62a ist vorliegend dazu vorgesehen, zumindest eine Heizzone zu berechnen und Heizelemente 18a, 18'a der ersten Heizgruppe 24a und/oder Heizelemente 20a, 20'a der zweiten Heizgruppe 26a und/oder zumindest Heizelemente 21a, 21'a der dritten Heizgruppe 28a festzulegen, welche diese Heizzone bilden. Die Steuereinheit 62a ist dazu vorgesehen, einer detektierten Aufstelleinheit 70a, 70'a eine in Form, Größe und/oder Position angepasste Heizzone zuzuordnen.

Zur Beheizung der Aufstelleinheit 70a, 70a' ist die Steuereinheit 62a dazu vorgesehen, zumindest eine Heizgruppe 24a, 26a, 28a anzusteuern und/oder zu regeln. In dieser beispielhaften Ausführung steuert und/oder regelt die Steuereinheit 62a zur Beheizung der Aufstelleinheit 70a zumindest zwei Heizelemente 18a, 18'a der ersten Heizgruppe 24a und zumindest zwei Heizelemente 20a, 20'a der zweiten Heizgruppe 26a. Zumindest zur Beheizung der Aufstelleinheit 70'a steuert und/oder regelt die Steuereinheit 62a zumindest zwei Heizelemente 21a, 21'a der dritten Heizgruppe 28a und zumindest zwei Heizelemente 20a, 20'a der zweiten Heizgruppe 26a.

Die Kochfeldvorrichtung 12a weist eine Bedienerschnittstelle 38a auf. Die Bedienerschnittstelle 38a ist zu einer Eingabe und/oder einer Ausgabe von und/oder an einen Bediener vorgesehen. Figur 2 zeigt, dass die erste Heizgruppe 24a in einem Randbereich 32a des Kochflächenbereichs 30a und die zweite Heizgruppe 26a in einem mittleren Bereich 35a des Kochflächenbereichs 30a angeordnet sind. In dieser beispielhaften Ausführung erstreckt sich der mittlere Bereich 25a ausgehend von der Bedienerschnittstelle 38a über eine gesamte Tiefe des Kochflächenbereichs 30a bis zu einem Rand der Aufstellplatte 14a. Die dritte Heizgruppe 28a ist in einem weiteren, und zwar dem Randbereich 32a gegenüberliegenden, Randbereich 60a des Kochflächenbereichs 30a angeordnet.

Vorliegend unterscheidet sich eine Anzahl von Heizelementen 18a, 18'a der ersten Heizgruppe 24a von einer Anzahl von Heizelementen 20a, 20'a der zweiten Heizgruppe 26a. Die Heizelemente 18a, 18'a der ersten Heizgruppe 24a und zumindest die Heizelemente 20a, 20'a der zweiten Heizgruppe 26a unterscheiden sich hinsichtlich einer Form und/oder Größe. In dieser beispielhaften Ausführung weisen die Heizelemente 18a, 18'a der ersten Heizgruppe 24a eine rechteckige Form auf. Die Heizelemente 20a, 20'a der zweiten Heizgruppe 26a weisen eine runde Form auf.

Zumindest die Heizelemente 18a, 18'a der ersten Heizgruppe 24a sind in einer einzelnen Reihe 60a angeordnet (vgl. Figur 2). Die Heizelemente 20a, 20'a der zweiten Heizgruppe 26a sind vorliegend zumindest teilweise matrixförmig angeordnet.

Der Kochflächenbereich 30a weist eine Breitenrichtung 82a und eine Tiefenrichtung 80a auf. In dieser beispielhaften Ausführung weist zumindest ein Heizelement 18a, 18'a der ersten Heizgruppe 24a in Breitenrichtung 82a des Kochflächenbereichs 30a betrachtet eine Breitenerstreckung 50a auf, welche zumindest im Wesentlichen um 50 % größer ist als eine Breitenerstreckung 52a zumindest eines Heizelements 20a, 20'a der zweiten Heizgruppe 26a. Der Übersichtlichkeit halber ist die Breitenerstreckung 50a beispielhaft bei dem Heizelement 18a und die Breitenerstreckung 52a beispielhaft bei dem Heizelement 20a eingezeichnet, wobei es sich bei der Breitenerstreckung 52a um den Durchmesser des Heizelements 20a handelt (vgl. Figur 2). Ist ein Heizelement kreisförmig ausgebildet, kann die Breitenerstreckung auch als Durchmesser, betrachtet in Breitenrichtung, verstanden werden.

Figur 2 zeigt, dass zumindest ein Heizelement 18a, 18'a der ersten Heizgruppe 24a in Tiefenrichtung 80a des Kochflächenbereichs 30a betrachtet eine Tiefenerstreckung 53a aufweist, welche zumindest im Wesentlichen identisch ist zu einer Tiefenerstreckung 56a zumindest eines Heizelements 20a, 20'a der zweiten Heizgruppe 26a. Der Übersichtlichkeit halber ist die Tiefenerstreckung 53a beispielhaft bei dem Heizelement 18a und die Tiefenerstreckung 56a beispielhaft bei dem Heizelement 20a eingezeichnet, wobei es sich bei der Tiefenerstreckung 56a um den Durchmesser des Heizelements 20a handelt (vgl. Figur 2). Ist ein Heizelement kreisförmig ausgebildet, kann die Tiefenerstreckung auch als Durchmesser, betrachtet in Tiefenrichtung, verstanden werden.

Vorliegend sind alle Heizelemente 18a, 18'a der ersten Heizgruppe 24a identisch zueinander ausgebildet. Ferner sind alle Heizelemente 20a, 20'a der zweiten Heizgruppe 26a identisch zueinander ausgebildet. Die Heizelemente 21a, 21'a der dritten Heizgruppe 28a sind identisch zu den Heizelementen 18, 18'a ersten Heizgruppe 24a ausgebildet. Die erste Heizgruppe 24a und die dritte Heizgruppe 28a unterscheiden sich lediglich durch ihre Anordnung in dem Kochflächenbereich 30a.

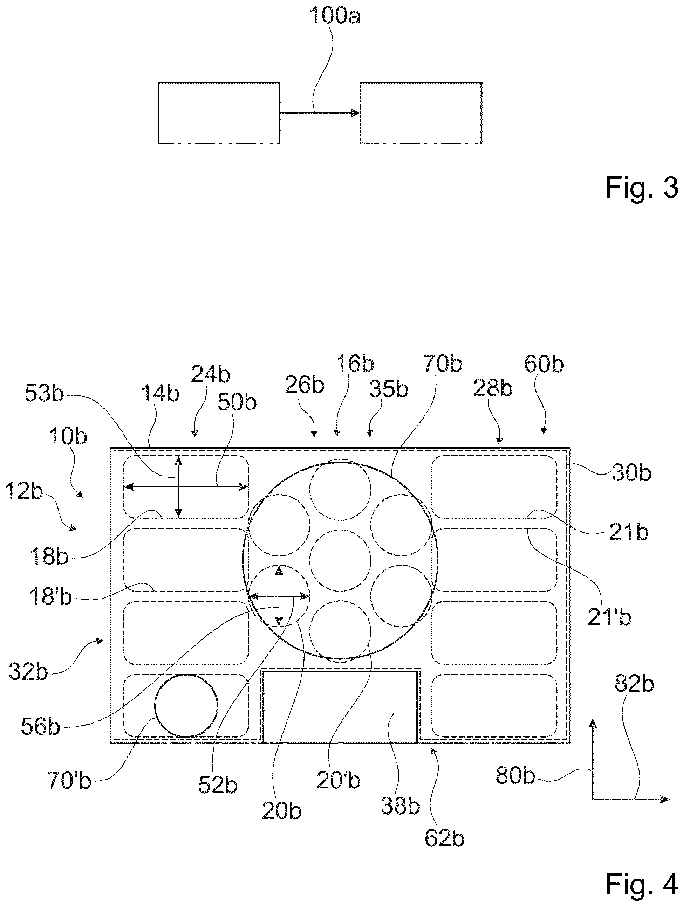

In der Figur 3 ist schematisch ein Verfahrensfließbild eines Verfahrens zum Betrieb der Kochfeldvorrichtung 12a dargestellt. Das Verfahren zum Betrieb könnte mehrere Verfahrensschritte umfassen. Vorliegend wird das Verfahren lediglich anhand eines Verfahrensschritts 100a beispielhaft beschrieben. Bei dem Verfahren zum Betrieb der Kochfeldvorrichtung 12a wird zumindest eine Heizzone angepasst an eine Form und/oder Größe und/oder Position einer Aufstelleinheit 70a, 70'a gebildet. In zumindest dem Verfahrensschritt 100a wird zumindest ein Heizelement 18a, 18'a der ersten Heizgruppe 24a und/oder zumindest ein Heizelement 20a, 20'a der zweiten Heizgruppe 26a und/oder zumindest ein Heizelement 21a, 21'a der dritten Heizgruppe 28a zur Beheizung zumindest der Aufstelleinheit 70a, 70'a angesteuert und/oder geregelt und/oder aktiviert. Bedeckt die Aufstelleinheit 70a, 70'a zumindest ein Heizelement 18a, 18'a oder mehr als ein Heizelement 18a, 18'a der ersten Heizgruppe 24a und/oder zumindest ein Heizelement 20a, 20'a oder mehr als ein Heizelement 20a, 20'a der zweiten Heizgruppe 26a und/oder zumindest ein Heizelement 21a, 21'a oder mehr als ein Heizelement 21a, 21'a der dritten Heizgruppe 28a, dann werden in dem Verfahrensschritt 100a die bedeckten Heizelemente 18a, 18'a der ersten Heizgruppe 24a und/oder die Heizelemente 20a, 20'a der zweiten Heizgruppe 26a und/oder die Heizelemente 21a, 21'a der dritten Heizgruppe 28a zu einer gemeinsamen Heizzone zur Beheizung der Aufstelleinheit 70a, 70'a zusammenschlossen und gemeinsam betrieben und/oder angesteuert und/oder geregelt.

In Figuren 4 bis 6 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch die Buchstaben b bis d in den Bezugszeichen der Ausführungsbeispiele der Figuren 4 bis 6 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Die Figur 4 zeigte ein Kochfeld 10b mit einer Kochfeldvorrichtung 12b eines weiteren Ausführungsbeispiels. Die Kochfeldvorrichtung 12b weist eine Heizeinheit 16b mit einer Mehrzahl an Heizelementen 18b, 18'b, 20b, 20'b, 21b, 21'b auf. Ein zweiter Teil der Heizelemente 20b, 20'b bildet eine zweite Heizgruppe 26b aus. Die Heizelemente 20b 20'b der zweiten Heizgruppe 26b sind vorliegend matrixförmig angeordnet. Die Kochfeldvorrichtung 12b unterscheidet sich zur Kochfeldvorrichtung 12a lediglich durch eine Anordnung der Heizelemente 20b, 20'b der zweiten Heizgruppe 26b in einem mittleren Bereich 35b eines Kochflächenbereichs 30b der Kochfeldvorrichtung 12b.

Ferner zeigt die Figur 4 beispielhaft zwei Aufstelleinheiten 70b, 70'b, welche im Vergleich zum Ausführungsbeispiel a, dargestellt in den Figuren 1 bis 3, andere Formen und/oder Größen und/oder Positionen auf dem Kochflächenbereich 30b aufweisen.

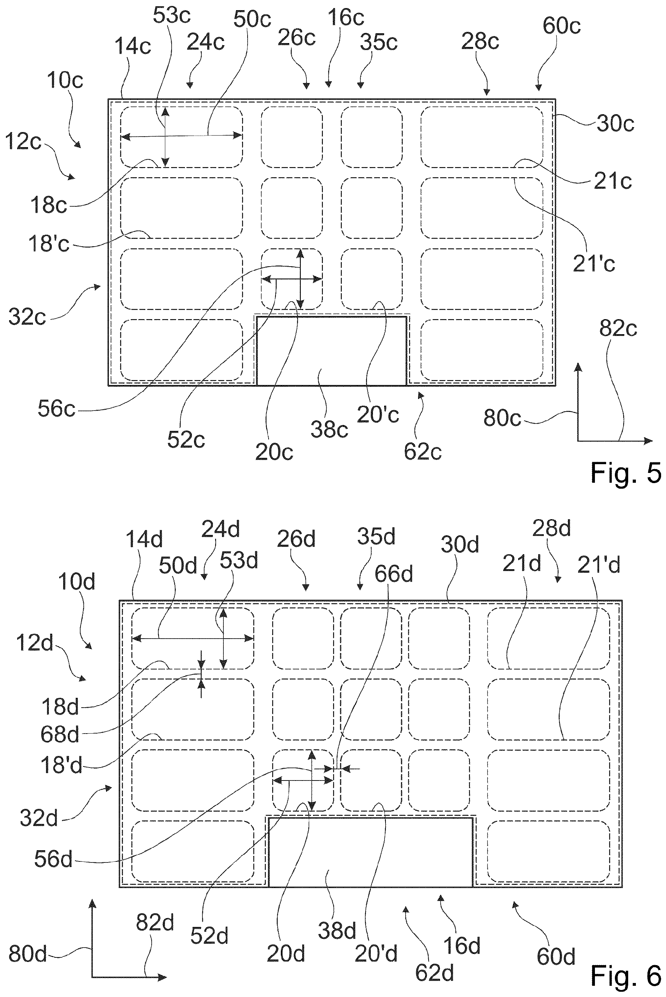

Die Figur 5 zeigte ein Kochfeld 10c mit einer Kochfeldvorrichtung 12c eines weiteren Ausführungsbeispiels. Die Kochfeldvorrichtung 12c weist eine Heizeinheit 16c mit einer Mehrzahl an Heizelementen 18c, 18'c, 20c, 20'c, 21c, 21'c auf. Ein zweiter Teil der Heizelemente 20c, 20'c bildet eine zweite Heizgruppe 26c aus. Die Kochfeldvorrichtung 12c unterscheidet sich zur Kochfeldvorrichtung 12a durch eine Ausgestaltung und eine Anordnung der Heizelemente 20c, 20'c der zweiten Heizgruppe 26c in einem mittleren Bereich 35c eines Kochflächenbereichs 30c der Kochfeldvorrichtung 12c. Die Heizelemente 20c, 20'c der zweiten Heizgruppe 26c weisen vorliegend eine quadratische Form auf.

Die Figur 6 zeigte ein Kochfeld 10d mit einer Kochfeldvorrichtung 12d eines weiteren Ausführungsbeispiels. Die Kochfeldvorrichtung 12d weist eine Heizeinheit 16d mit einer Mehrzahl an Heizelementen 18d, 18'd, 20d, 20'd, 21d, 21'd auf. Ein erster Teil der Heizelemente 18d, 18'd bildet eine erste Heizgruppe 24d aus. Ein zweiter Teil der Heizelemente 20d, 20'd bildet eine zweite Heizgruppe 26d aus. Die Kochfeldvorrichtung 12d unterscheidet sich zur Kochfeldvorrichtung 12a durch eine Ausgestaltung und eine Anordnung der Heizelemente 20d, 20'd der zweiten Heizgruppe 26d in einem mittleren Bereich 35d eines Kochflächenbereichs 30d der Kochfeldvorrichtung 12d. Die Heizelemente 20d, 20'd der zweiten Heizgruppe 26d weisen vorliegend eine quadratische Form auf. Im Vergleich zu dem Ausführungsbeispiel c dargestellt in Figur 5, weist die zweite Heizgruppe 26d eine größere Anzahl an Heizelementen 20d, 20'd auf. In dieser beispielhaften Ausführung weisen zumindest zwei benachbarte Heizelemente 20d, 20'd der zweiten Heizgruppe 26d in Breitenrichtung 82d betrachtet einen kleineren Abstand 66d zueinander auf als zumindest zwei benachbarte Heizelemente 18d, 18'd der ersten Heizgruppe 24d. Die zumindest zwei benachbarte Heizelemente 18d, 18'd der ersten Heizgruppe 24d weisen einen Abstand 68d zueinander auf. Vorliegend ist der Abstand 66d kleiner als der Abstand 68d.

### Bezugszeichen

- 10: Kochfeld
- 12: Kochfeldvorrichtung
- 14: Aufstellplatte
- 16: Heizeinheit
- 18: Heizelement
- 20: Heizelement
- 21: Heizelement
- 24: Heizgruppe
- 26: Heizgruppe
- 28: Heizgruppe
- 30: Kochflächenbereich
- 32: Randbereich
- 35: Mittlerer Bereich
- 38: Bedienerschnittstelle
- 50: Breitenerstreckung
- 52: Breitenerstreckung
- 53: Tiefenerstreckung
- 56: Tiefenerstreckung
- 60: Randbereich
- 62: Steuereinheit
- 66: Abstand
- 68: Abstand
- 70: Aufstelleinheit
- 80: Tiefenrichtung
- 82: Breitenrichtung
- 100: Verfahrensschritt

## Patentansprüche

1. Kochfeldvorrichtung (12a-d), insbesondere Induktionskochfeldvorrichtung, mit einer Aufstellplatte (14a-d) und mit zumindest einer unterhalb der Aufstellplatte (14a-d) angeordneten Heizeinheit (16a-d), welche eine Mehrzahl von Heizelementen (18a, 18'a, 20a, 20'a, 21a, 21'a; 18b, 18'b, 20b, 20'b, 21b, 21'b; 18c, 18'c, 20c, 20'c, 21c, 21'c; 18d, 18'd, 20d, 20'd, 21d, 21'd) aufweist, wobei ein erster Teil der Heizelemente (18a, 18'a; 18b, 18'b; 18c, 18'c; 18d, 18'd) eine erste Heizgruppe (24a-d) und zumindest ein zweiter Teil der Heizelemente (20a, 20'a; 20b, 20'b; 20c, 20'c; 20d, 20'd) zumindest eine zweite Heizgruppe (26a-d) bilden, wobei sich eine Anzahl von Heizelementen (18a, 18'a; 18b, 18'b; 18c, 18'c; 18d, 18'd) der ersten Heizgruppe (24a-d) von einer Anzahl von Heizelementen (20a, 20'a; 20b, 20'b; 20c, 20'c; 20d, 20'd) der zweiten Heizgruppe (26a-d) unterscheidet, und die erste Heizgruppe (24a-d) und zumindest die zweite Heizgruppe (26a-d) dazu vorgesehen sind, einen gemeinsamen Kochflächenbereich (30a-d) auszubilden.

2. Kochfeldvorrichtung (12a-d) nach Anspruch 1, **dadurch gekennzeichnet, dass** die erste Heizgruppe (24a-d) in einem Randbereich (32a-d) des Kochflächenbereichs (30a-d) und die zweite Heizgruppe (26a-d) in einem mittleren Bereich (35a-d) des Kochflächenbereichs (30a-d) angeordnet ist.

3. Kochfeldvorrichtung (12a-d) nach Anspruch 1 oder 2, **dadurch gekennzeichnet, dass** sich die Heizelemente (18a, 18'a; 18b, 18'b; 18c, 18'c; 18d, 18'd) der ersten Heizgruppe (24a-d) und zumindest die Heizelemente (20a, 20'a; 20b, 20'b; 20c, 20'c; 20d, 20'd) der zweiten Heizgruppe (26a-d) hinsichtlich einer Form und/oder Größe unterscheiden.

4. Kochfeldvorrichtung (12d) nach einem der vorhergehenden Ansprüche, **dadurch gekennzeichnet, dass** zumindest zwei benachbarte Heizelemente (20d, 20'd) der zweiten Heizgruppe (26d) einen kleineren Abstand (66d) zueinander aufweisen als zumindest zwei benachbarte Heizelemente (18d, 18'd) der ersten Heizgruppe (24d).

5. Kochfeldvorrichtung (12a-d) nach einem der vorhergehenden Ansprüche, **dadurch gekennzeichnet, dass** zumindest ein Heizelement (18a, 18'a; 18b, 18'b; 18c, 18'c; 18d, 18'd) der ersten Heizgruppe (24a-d) in Breitenrichtung (82a-d) des Kochflächenbereichs (30a-d) betrachtet eine Breitenerstreckung (50a-d) aufweist, welche zumindest im Wesentlichen um 50 % größer ist als eine Breitenerstreckung (52a-d) zumindest eines Heizelements (20a, 20'a; 20b, 20'b; 20c, 20'c; 20d, 20'd) der zweiten Heizgruppe (26a-d).

6. Kochfeldvorrichtung (12a-d) nach einem der vorhergehenden Ansprüche, **dadurch gekennzeichnet, dass** zumindest ein Heizelement (18a, 18'a; 18b, 18'b; 18c, 18'c; 18d, 18'd) der ersten Heizgruppe (24a-d) in Tiefenrichtung (80a-d) des Kochflächenbereichs (30a-d) betrachtet eine Tiefenerstreckung (53a-d) aufweist, welche zumindest im Wesentlichen identisch ist zu einer Tiefenerstreckung (56a-d) zumindest eines Heizelements (20a, 20'a; 20b, 20'b; 20c, 20'c; 20d, 20'd) der zweiten Heizgruppe (26a-d).

7. Kochfeldvorrichtung (12a-d) nach einem der vorhergehenden Ansprüche, **dadurch gekennzeichnet, dass** zumindest die Heizelemente (18a, 18'a; 18b, 18'b; 18c, 18'c; 18d, 18'd) der ersten Heizgruppe (24a-d) in einer Reihe angeordnet sind.

8. Kochfeldvorrichtung (12a-d) nach einem der vorhergehenden Ansprüche, **dadurch gekennzeichnet, dass** zumindest die Heizelemente (20a, 20'a; 20b, 20'b; 20c, 20'c; 20d, 20'd) der zweiten Heizgruppe (26a-d) zumindest teilweise matrixförmig angeordnet sind.

9. Kochfeldvorrichtung (12a-d) nach einem der vorhergehenden Ansprüche, **dadurch gekennzeichnet, dass** ein dritter Teil der Heizelemente (21a, 21'a; 21b, 21'b; 21c, 21'c; 21d, 21'd) eine dritte Heizgruppe (28a-d) bilden, welcher identisch zu der ersten Heizgruppe (24a-d) ausgebildet ist.

10. Kochfeldvorrichtung (12a-d) nach Anspruch 9, **dadurch gekennzeichnet, dass** die dritte Heizgruppe (28a-d) in einem weiteren, insbesondere dem Randbereich (32a-d) gegenüberliegenden, Randbereich (60a-d) des Kochflächenbereichs (30a-d) angeordnet ist.

11. Kochfeld (10), insbesondere Induktionskochfeld, mit einer Kochfeldvorrichtung (12) nach einem der vorhergehenden Ansprüche.

12. Verfahren zum Betrieb einer Kochfeldvorrichtung (12) nach einem der Ansprüche 1 bis 10.
